## Europäisches Patentamt

## European Patent Office

## Office européen des brevets

(19)

(11) Numéro de publication: **0 148 093 B1**

(12) **FASCICULE DE BREVET EUROPEEN**

(45) Date de publication du fascicule du brevet:
**09.03.88**

(51) Int. Cl.⁴: **B 65 G 1/02**

(21) Numéro de dépôt: **84402761.5**

(22) Date de dépôt: **28.12.84**

(54) Installation pour l'approvisionnement en marchandises de rayonnages de vente, et procédé correspondant.

(30) Priorité: **04.01.84 FR 8400136**

(43) Date de publication de la demande:
**10.07.85 Bulletin 85/28**

(45) Mention de la délivrance du brevet:
**09.03.88 Bulletin 88/10**

(84) Etats contractants désignés:
**AT BE CH DE FR GB IT LI LU NL SE**

(56) Documents cités:
**DE - A - 2 922 149**
**DE - B - 2 403 742**
**US - A - 2 808 946**

**PATENTS ABSTRACTS OF JAPAN, vol. 7, no. 124 (M-218)[1269], 28 mai 1983**

(73) Titulaire: **Belloche, Alain, 9, avenue du Mail, F-35000 Rennes (FR)**

(72) Inventeur: **Belloche, Alain, 9, avenue du Mail, F-35000 Rennes (FR)**

(74) Mandataire: **Rodhain, Claude, Cabinet Claude Rodhain 30, rue la Boétie, F-75008 Paris (FR)**

# Description

La présente invention concerne une installation permettant d'optimiser la mise en place des marchandises dans les rayonnages et les présentoirs d'une surface de vente, du type des centres de distribution de marchandises en libre service, tels que les superettes, les supermarchés, et les hypermarchés. Plus particulièrement, l'invention s'applique aux surfaces de vente qui présentent au moins un niveau de vente accessible aux consommateurs, supportant des rayonnages alignés parallèlement les uns aux autres sur plusieurs rangs. Ces rayonnages définissent entre eux des allées de circulation pour les acheteurs.

L'invention concerne également un procédé d'approvisionnement des surfaces de vente, permis grâce à cette installation.

Traditionnellement, dans les supermarchés et les hypermarchés, le remplissage en marchandises des rayonnages de vente s'effectue du même côté que la prise de ces marchandises par la clientèle. Ceci est dû au fait que toutes les faces d'un rayonnage, ou d'une gondole, sont accessibles aux consommateurs.

Or, ce principe d'approvisionnement présente l'inconvénient que le remplissage des rayonnages est rendu très difficile lors des heures d'ouverture des magasins, voire même impossible aux moments d'affluence. Cet inconvénient entraîne un manque à gagner certain pour le magasin lorsque certains rayonnages sont vides pendant un certain temps, tout en détériorant son image de marque aussi bien du fait du mécontentement du consommateur de ne pas trouver le produit qu'il cherche, que du fait des chariots d'approvisionnement qui obstruent les passages. D'autre part, le fait d'approvisionner les rayons du même côté que la vente entraîne que les marchandises les dernières placées sont les premières à partir, et que donc des marchandises âgées, poussiéreuses, voire périssables risquent de rester des mois en fond de rayon et de devenir invendable. La méthode utilisée généralement pour pallier cet inconvénient consiste à vider complètement les rayons pour pouvoir placer ces marchandises «âgées» devant les nouvelles, ce qui entraîne des manipulations malaisées, fastidieuses, et souvent impraticables en présence de la clientèle.

Enfin, l'approvisionnement en marchandises s'effectue généralement à partir de locaux de réserve situés relativement éloignés de la surface de vente. Ceci présente alors l'inconvénient supplémentaire d'obliger à faire parcourir aux marchandises une distance non négligeable, des locaux de réserve à la surface de vente. Plusieurs sections d'un grand magasin peuvent donc être successivement encombrées par les chariots effectuant ce parcours.

On connait également un entrepôt industriel de stockage décrit dans le brevet allemand DE-B-2 403 742 (DEMAG). Ce document décrit un entrepôt comportant plusieurs niveaux de stockage superposés supportant des rayonnages parallèles définissant entre eux des allées piétonnières. Les rayonnages présentent, d'une part, une face par laquelle les marchandises sont retirées et, d'autre part, une face d'approvisionnement. Les différents niveaux de stockage communiquent entre eux par des ouvertures de transfert jouxtant la face d'approvisionnement des rayonnages. Des moyens mobiles élévateurs sont prévus pour amener les marchandises vers les rayonnages.

En conséquence, un objet principal de l'invention est de remédier à tous les inconvénients mentionnés ci-dessus, et notamment à éliminer la gêne occasionnés aux consommateurs par les carences d'approvisionnement ou la circulation des marchandises, ainsi que la détérioration de l'image de marque des magasins mal approvisionnés.

Un objet essentiel de l'invention est donc de fournir une installation et un procédé pour l'approvisionnement des rayonnages de centres de distribution de marchandises en libre service, tels que les supérettes, les super- et les hypermarchés, du type comportant au moins un niveau de vente accessible aux consommateurs, supportant des rayonnages parallèles, définissant entre eux des allées piétonnières, cette installation permettant un approvisionnement direct et immédiat des rayonnages sans passer par les allées piétonnières.

Un autre objet de l'invention est d'approvisionner les rayonnages en marchandises selon la méthode FIFO (premier entré, premier sorti), afin de faire partir les premières les marchandises les plus anciennes.

Un objet complémentaire de l'invention est de rapprocher au maximum les locaux de stockage et de réserve des rayonnages de vente, afin de permettre un approvisionnement quasi instantané. L'invention permet en effet, pour chaque marchandise, de placer ses rayonnages de réserve à proximité immédiate de ses rayonnages de vente.

A cet effet on propose conformément à l'invention une installation pour l'approvisionnement des rayonnages de centres de distribution de marchandises en libre service, tels que les supérettes, les super- et hypermarchés, comprenant des rayonnages superposés et accessibles sur des faces opposées, comportant

– au moins un niveau de vente A accessible aux consommateurs, supportant des rayonnages parallèles définissant entre eux des allées piétonnières, et présentant chacun une face d'approvisionnement des rayonnages en marchandises à l'aide de moyens mobiles élévateurs, et une face de vente constituée par la face opposé à ladite face d'approvisionnement, et,

– au moins un niveau de stockage B distinct dudit niveau de vente A, et supérieur et/ou inférieur à ce dernier, lesdits rayonnages étant agencés en gondoles présentant un espace libre inaccessible aux consommateurs, vers lequel sont tournées les faces d'approvisionnement desdits rayonnages, lesdits moyens mobiles élévateurs circulant à travers des ouvertures de transfert depuis le niveau de stockage B jusqu'à l'espace intérieur desdits gondoles. L'invention concerne également un procédé d'approvisionnement des rayonnages de centres de distribution des marchandises en libre service dans une installation telle que proposée ci-dessus, selon lequel

– on prélève, à l'aide d'une plate-forme élévatrice, les marchandises stockées dans des rayonnages de réserve, situés dans un niveau de stockage B différent du niveau de vente A;

– on amène la plate-forme élévatrice en alignement vertical avec une ouverture de transfert faisant communiquer entre eux le niveau de vente A et le niveau de stockage B, et débouchant en regard de la face d'approvisionnement inaccessible au public des rayonnages de vente;

– on déplace verticalement la plate-forme élévatrice chargée, à travers ladite ouverture de transfert, en direction du niveau de vente A, jusqu'à ce qu'elle se trouve à la hauteur de la face d'approvisionnement des rayonnages de vente;

– on dispose les marchandises transportées sur les rayonnages selon la méthode «premier entré, premier sorti»;

– on ramène la plate-forme élévatrice au niveau de stockage pour pouvoir l'amener en alignement vertical avec une autre ouverture de transfert.

En outre, l'invention peut être réalisée de manière plus simplifiée, si chaque gondole de vente n'est formée que d'un seul rayonnage, dont la face d'approvisionnement est située en regard d'une ouverture de transfert assurant la communication avec le niveau de stockage, et dont l'autre face est réservée à la vente. Le procédé d'approvisionnement reste similaire à celui décrit ci-dessus.

D'autres caractéristiques et avantages de l'invention apparaitront à la lecture d'un mode de réalisation préférentiel décrit ci-dessous, et des dessins annexés dans lesquels:

– la figure 1 représente une vue de dessus d'une surface de vente selon l'invention,

– la figure 2 représente une vue en perspective et en coupe des différents dispositifs et aspects de l'installation d'approvisionnement selon l'invention.

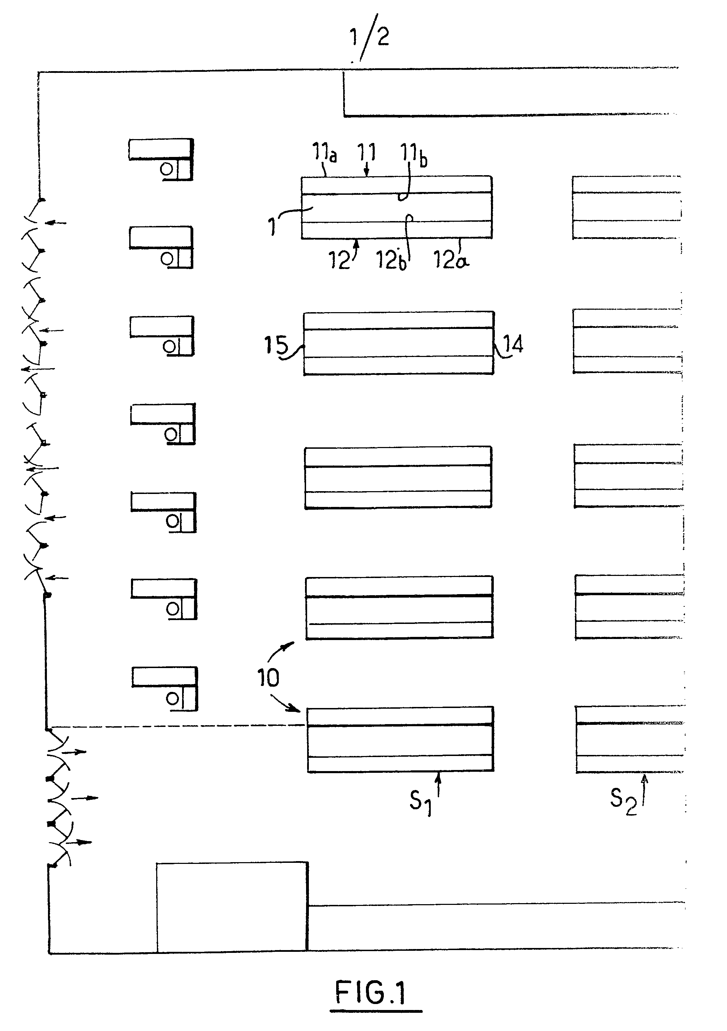

En figure 1, on a représenté la disposition classique d'une grande surface, dans laquelle des gondoles 10 de présentation des marchandises sont disposées parallèlement les unes aux autres en séries successives s1, s2. . . .

On trouve également, de manière connue, une ligne de caisses, une caisse centrale, et des rayonnages latéraux adossés au mur (par exemple pour la distribution des produits frais).

Les gondoles 10 selon l'invention sont constituées de l'assemblage de deux rayonnages parallèles 11, 12, alignés à distance l'un de l'autre, de façon à ménager entre eux un espace libre d'approvisionnement 1. En outre, les deux extrémités de chaque gondole sont préférentiellement fermées, afin de rendre l'espace centrale 1 inaccessible au public. Les consommateurs ont donc accès, pour chaque rayonnage 11, 12, à la face extérieure de vente 11a, 12a. En revanche, ils ne peuvent venir prélever de marchandises sur les faces opposées d'approvisionnement 11b, 12b.

Les extrémités 14, 15 des gondoles peuvent être formées de simples parois de fermeture, ou peuvent également comprendre des rayonnages, des corbeilles de marchandises, ou tout autre système de présentation à la vente.

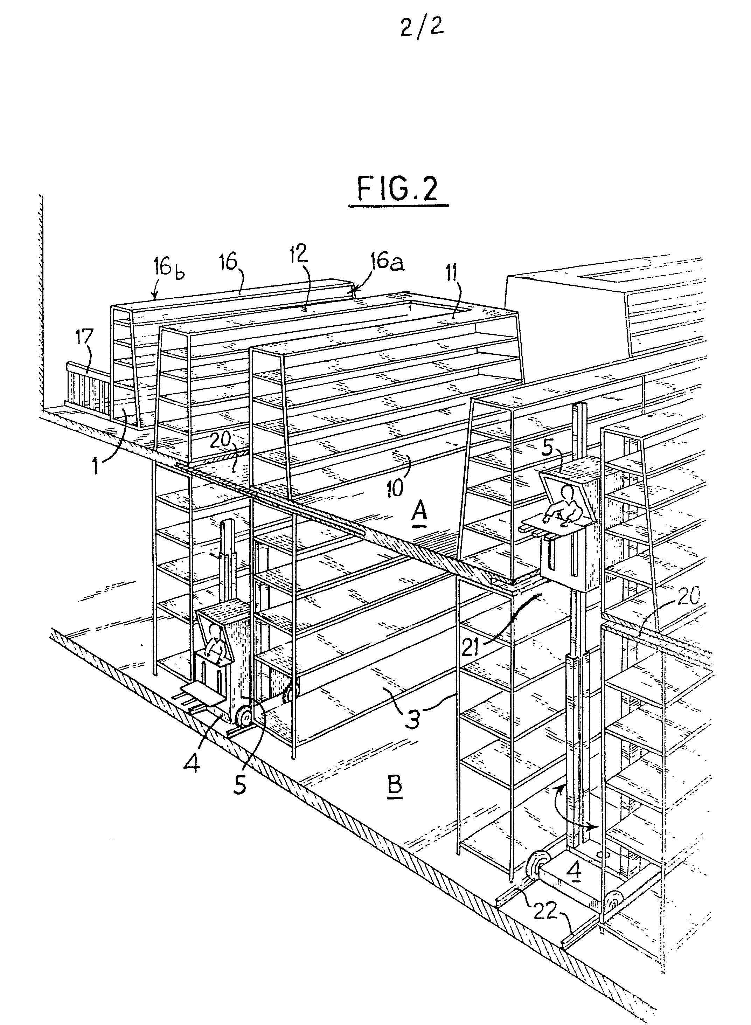

En figure 2, on trouve une illustration détaillée du fonctionnement de l'installation, et notamment de l'utilisation des espaces d'approvisionnement 1.

L'installation se compose d'au moins un niveau supérieur de vente A, correspondant à la vue de dessus de la figure 1, et au moins un niveau inférieur de réserve B, pour le stockage des marchandises non exposées à la vente.

Le niveau de réserve B comporte des rayonnages de réserve 3, qui coïncident verticalement avec les rayonnages 11, 12 des gondoles 10 de vente se trouvant au niveau de vente A. Ces rayonnages de réserve 3 ménagent donc entre eux sensiblement le même espace libre d'approvisionnement 1 que celui des gondoles 10. Chaque espace d'approvisionnement 1 est donc un volume formé:

– en hauteur, par l'addition des hauteurs des rayonnages de réserve 3 et des rayonnages de vente 11, 12;

– en longueur, par la longueur des rayonnages de vente 11, 12;

– en largeur, par la largeur de moyens mobiles élévateurs d'approvisionnement 4 assurant le transport des marchandises entre le niveau inférieur de stockage B et le niveau supérieur de vente A.

Selon le mode de réalisation représenté, ces moyens mobiles élévateurs sont constitués d'au moins un chariot élévateur automobile, du type «préparation de commande», dont la plate-forme élévatrice évolue entre au moins deux positions:

– une position basse dans laquelle la hauteur hors-tout dudit chariot est inférieure à la hauteur sous plafond du niveau de stockage (B);

– une position haute dans laquelle la plate-forme est amenée sensiblement à la hauteur des rayonnages au niveau de vente A; le chariot circulant d'une gondole à l'autre lorsque ladite plate-forme est en position basse.

Ces chariots 4 à cabine élévatrice 5 viennent donc prélever les marchandises dans les rayonnages de réserve 3 pour les déposer dans les rayonnages de vente 11, 12. Ils peuvent également effectuer l'opération inverse. A cet effet, la cabine 5 du chariot passe, par simple élévation, du niveau de réserve B au niveau de vente A, à l'intérieur de l'espace d'approvisionnement 1, et peut avancer ou reculer, lorsqu'il se trouve en position haute, sur toute la longueur de l'espace d'approvisionnement 1, à l'intérieur des deux rayonnages de vente 11, 12.

En revanche, lorsque le chariot 4 a sa cabine 5 en position basse, il peut évoluer dans n'importe quel endroit de la réserve.

Il en résulte une amélioration de la productivité, et des conditions de manipulation des marchandises beaucoup plus confortables. Le réapprovisionnement des rayons de vente peut s'effectuer à tout moment, et le système d'approvisionnement par la face «arrière» des rayonnages de vente 11, 12 favorise le départ en premier des marchandises exposées à la vente en premier.

On peut également noter que les réimplantations des rayons peuvent être préparées par les responsables sans qu'il soit nécessaire de vider le rayonnage au préalable pour préparer le «musée».

Il faut noter que les moyens mobiles élévateurs peuvent tout aussi bien être constitués de monte-charges déplaçables; les rayonnages 3 de réserve peuvent en outre être placés selon une disposition différente de celle représentée en figure 2.

Selon un autre mode de réalisation simplifié, les gondoles 10 peuvent être constituées d'un seul rayonnage 16, longeant un vide d'approvisionnement 1. Ce rayonnage 16 présente une face de vente 16a, seule accessible aux consommateurs, et une face d'approvisionnement 16b, en regard du vide d'approvisionnement 1. Une barrière 17 ou tout autre obstacle, constitue une protection des personnes, en empêchant d'accéder à l'espace vide d'approvisionnement 1.

Selon une autre version, la barrière 17 peut être remplacée par des rayonnages ou tout autre dispositif de présentation de marchandises.

Des dispositifs de sécurité peuvent être mis en place dans l'installation, à savoir:

— des panneaux coupe-feux 20 peuvent venir obturer l'ouverture de transfert 21 (pratiquée au niveau du plancher du niveau de vente A afin de constituer le vide d'approvisionnement 1). Ces panneaux 20 sont coulissants, et disposés parallèlement au plancher du niveau A, entre le haut des rayonnages de réserve 3, et ce plancher.

— les tablettes des rayonnages de vente 11, 12 servent de protection naturelle par rapport à l'espace d'approvisionnement 1, du fait de leur faible espacement.

— dans les endroits où sont prévues des box-palettes, des garde-fous peuvent être disposés devant ces box-palettes (du type des rebords de fenêtre), pour éviter que des enfants puissent s'approcher de l'espace vide d'approvisionnement 1.

Des systèmes tactiles et/ou optiques de détection des obstacles à l'évolution de la plate-forme élévatrice 5 du chariot d'approvisionnement 4 pourront être disposés à l'intérieur de l'espace d'approvisionnement 1, ou sur la cabine 5 du chariot, de manière à bloquer l'avancement ou l'élévation si des marchandises dépassaient des rayonnages. Ces systèmes permettent également de renforcer la sécurité dans le cas où, malgré toutes les précautions prises, une personne arrivera à passer une main ou autre à l'intérieur de l'espace vide d'approvisionnement 1.

Selon un mode de réalisation avantageuse de l'invention, des contacts fin de course bloquent l'avancement ou le recul de la cabine 5 en position haute, dans les extrémités des rayonnages de vente.

Enfin, des rails de guidage 22 sont disposés sur le plancher du niveau de stockage B, en regard des ouvertures de transfert 21, de façon à permettre le centrage du chariot 4 par rapport à l'ouverture de transfert 21.

Le procédé d'approvisionnement des rayonnages au moyen de l'installation ci-dessus décrite est donc le suivant.

Dans le cas où une gondole devant 10 n'est constituée que d'un seul rayonnage 16, le procédé est caractérisé en ce que:

— on prélève, à l'aide d'une plate-forme élévatrice, les marchandises stockées dans des rayonnages de réserve, situés dans un niveau de stockage B inférieur au niveau de vente A;

— on amène la plate-forme élévatrice en alignement vertical avec une ouverture de transfert pratiquée dans le plafond du niveau de stockage B, débouchant en regard de la face d'approvisionnement dudit rayonnage de vente;

— on élève la plate-forme élévatrice chargée en position haute, à travers ladite ouverture de transfert, en direction du niveau de vente A, jusqu'à ce qu'elle se trouve à la hauteur de la face d'approvisionnement des rayonnages de vente;

— on dispose les marchandises transportées sur les rayonnages, selon la méthode «premier entré, premier sorti»;

— on ramène la plate-forme élévatrice en position basse, pour pouvoir l'amener en alignement vertical avec une autre ouverture de transfert.

Dans le cas où les gondoles sont constituées de deux rayonnages parallèles 11, 12, le procédé se caractérise en ce que:

— on prélève, à l'aide d'une plate-forme élévatrice, les marchandises stockées dans des rayonnages de réserve, situés à un niveau de stockage B inférieur au niveau de vente A;

— on amène la plate-forme élévatrice en alignement vertical avec une ouverture de transfert pratiquée dans le plafond du niveau de stockage B, ladite ouverture de transfert débouchant dans l'espace central d'approvisionnement d'une dite gondole de distribution;

— on élève la plate-forme élévatrice chargée en position haute, à travers ladite ouverture de transfert, en direction du niveau de vente A, jusqu'à ce qu'elle se trouve à la hauteur des faces d'approvisionnement des rayonnages de vente de ladite gondole;

— on dépose les marchandises transportées sur les rayonnages de la gondole, selon la méthode «premier entré, premier sorti»;

— on ramène la plate-forme élévatrice en position basse, pour pouvoir l'amener en alignement vertical avec une autre ouverture de transfert.

Il est à noter que l'installation selon l'invention peut également comporter plusieurs niveaux de vente et plusieurs niveaux de stockage.

## Revendications

1. Installation pour l'approvisionnement des rayonnages de centres de distribution de marchandises en libre service, tels que les supérettes, les super- et hypermarchés, comprenant des rayonnages superposés et accessibles sur des faces opposées, comportant

— au moins un niveau de vente A accessible aux consommateurs, supportant des rayonnages (11, 12, 16) parallèles définissant entre eux des allées piétonnières, et présentant chacun une face d'approvisionnement des rayonnages en marchandises à l'aide de moyens mobiles élévateurs, et une face de vente (11a, 12a, 16a) constituée par la face opposée à ladite face d'approvisionnement (11b, 12b, 16b), et,

– au moins un niveau de stockage B distinct dudit niveau de vente A, et supérieur et/ou inférieur à ce dernier, lesdits rayonnages (11, 12, 16) étant agencés en gondoles (10) présentant un espace libre (1) inaccessible aux consommateurs, vers lequel sont tournées les faces d'approvisionnement (11b, 12b, 16b) desdits rayonnages (11, 12, 16), lesdits moyens mobiles élévateurs (4) circulant à travers des ouvertures de transfert (21) depuis le niveau de stockage B jusqu'à l'espace intérieur (1) desdites gondoles (10).

2. Installation selon la revendication 1, caractérisée en ce que ledit niveau de vente A est situé au-dessus dudit niveau de stockage B, et que lesdits moyens mobiles élévateurs (4) sont déplaçables horizontalement sur ledit niveau inférieur de stockage B.

3. Installation selon l'une quelconque des revendications 1 et 2, caractérisée en ce que les moyens mobiles élévateurs (4) sont constitués d'au moins un chariot élévateur automobile (4) dont la plate-forme élévatrice (5) évolue entre au moins deux positions:

– une position basse dans laquelle la hauteur hors-tout dudit chariot (4) est inférieure à la hauteur sous plafond du niveau de stockage B;

– une position haute dans laquelle la plate-forme est amenée sensiblement à la hauteur des rayonnages (11, 12) du niveau de vente A, le chariot (4) circulant d'une gondole (10) à l'autre lorsque ladite plate-forme (5) est en position basse.

4. Installation selon la revendication 1, caractérisée en ce qu'elle est pourvue de systèmes tactiles et/ou optiques de détection des obstacles à l'évolution de la plate-forme élévatrice (5) desdits moyens mobiles élévateurs (4).

5. Installation selon la revendication 1, caractérisée en ce que des rails (22) de guidage et de centrage des moyens mobiles élévateurs (4) sont disposés sur le sol du niveau de stockage B, à la verticale des ouvertures de transfert (21).

6. Installation selon l'une quelconque des revendications 1 ou 2, caractérisée en ce que des rayonnages de réserve (3) sont installés sur le niveau de stockage B, sensiblement à la verticale des rayonnages (11, 12, 16) du niveau de vente A.

7. Installation selon l'une quelconque des revendications 1 et 2, caractérisée en ce qu'un panneau coupe-feu (20) coulissant, est disposé au niveau de chaque ouverture de transfert (21).

8. Procédé d'approvisionnement des rayonnages de centres de distribution des marchandises en libre service dans une installation selon l'une quelconque des revendications 1 à 7, selon lequel

– on prélève, à l'aide d'une plate-forme élévatrice (5), les marchandises stockées dans des rayonnages de réserve (4), situés dans un niveau de stockage B différent du niveau de vente A;

– on amène la plate-forme élévatrice en alignement vertical avec une ouverture de transfert faisant communiquer entre eux le niveau de vente A et le niveau de stockage B, et débouchant en regard de la face d'approvisionnement inaccessible au public des rayonnages de vente;

– on déplace verticalement la plate-forme élévatrice (5) chargée, à travers ladite ouverture de transfert (21), en direction du niveau de vente A, jusqu'à ce qu'elle se trouve à la hauteur de la face d'approvisionnement (11b, 12b, 16b) des rayonnages de vente (11, 12, 16);

– on dispose les marchandises transportées sur les rayonnages (11, 12, 16) selon la méthode «premier entré, premier sorti»;

– on ramène la plate-forme élévatrice (5) au niveau de stockage pour pouvoir l'amener en alignement vertical avec une autre ouverture de transfert (21).

**Patentansprüche**

1. Zuführvorrichtung für Verkaufsregale von Selbstbedienungsgeschäften wie etwa Supermärkten, welche übereinanderliegende Verkaufsregale umfasst, die an gegenüberliegenden Seiten zugänglich sind, umfassend

– wenigstens eine für die Verbraucher zugängliche Verkaufsfläche (A), die parallele Verkaufsregale (11, 12, 16) trägt, welche zwischen sich Durchgänge für Fussgänger definieren und jeweils eine Zuführseite zur Zufuhr von Waren mittels beweglicher Aufzugsvorrichtungen sowie eine Verkaufsseite (11a, 12a, 16a) aufweisen, die durch die der genannten Zuführseite (11b, 12b, 16b) gegenüberliegende Seite gebildet wird, und

– wenigstens eine von der genannten Verkaufsfläche (A) verschiedene Lagerfläche (B) oberhalb und/oder unterhalb der Verkaufsfläche,

– wobei die Verkaufsregale (11, 12, 16) zu Gondeln (10) zusammengestellt sind, die einen für Verbraucher unzugänglichen freien Raum (1) aufweisen, dem die Zuführseiten (11b, 12b, 16b) der Verkaufsregale (11, 12, 16) zugewandt sind und wobei die beweglichen Aufzugsvorrichtungen (4) durch Förderöffnungen (21) hindurch von der Lagerfläche (B) in den inneren Raum (1) der Gondeln (10) verfahrbar sind.

2. Zuführvorrichtung nach Anspruch 1, dadurch gekennzeichnet, dass die Verkaufsfläche (A) oberhalb der Lagerfläche (B) angeordnet ist und dass die beweglichen Aufzugsvorrichtungen (4) in horizontaler Richtung auf der unteren Lagerfläche (B) fortbewegbar sind.

3. Zuführvorrichtung nach einem der Ansprüche 1 und 2, dadurch gekennzeichnet, dass die beweglichen Aufzugsvorrichtungen (4) von wenigstens einem selbstbeweglichen Aufzugswagen (4) gebildet werden, dessen Aufzugsplattform (5) zwischen zwei Stellungen bewegbar ist:

– einer unteren Stellung, in welcher die Höhe über alles des Wagens (4) geringer ist als die Deckenhöhe der Lagerfläche (B);

– einer oberen Stellung, in welcher die Plattform (5) genau auf die Höhe der Verkaufsregale (11, 12) der Verkaufsfläche (A) geführt ist, und wobei sich der Wagen (4) von einer Gondel (10) zur nächsten bewegt, während sich die Plattform (5) in der unteren Stellung befindet.

4. Zuführvorrichtung nach Anspruch 1, dadurch gekennzeichnet, dass sie mit Fühlersystemen und/oder optischen Systemen zur Erfassung von Hindernissen bei der Bewegung der Aufzugsplattform (5) der beweglichen Aufzugsvorrichtungen (4) versehen ist.

5. Zuführvorrichtung nach Anspruch 1, dadurch gekennzeichnet, dass Führungs- und Zentrierungsschienen (22) der beweglichen Aufzugsvorrichtungen (4) auf dem Boden der Lagerfläche (B) senkrecht unterhalb der Förderöffnungen (21) vorgesehen sind.

6. Zuführvorrichtung nach Anspruch 1 oder 2, dadurch gekennzeichnet, dass Nachfüllregale (3) auf der Lagerfläche (B) angeordnet sind, genau senkrecht unterhalb der Verkaufsregale (11, 12, 16) der Verkaufsfläche (A).

7. Zuführvorrichtung nach Anspruch 1 oder 2, dadurch gekennzeichnet, dass in der Höhe jeder Förderöffnung (21) eine gleitbare Feuerschutztür angeordnet ist.

8. Zuführverfahren für Verkaufsregale von Selbstbedienungsgeschäften mit einer Zuführvorrichtung nach einem der Ansprüche 1 bis 7, bei welchem man

– mittels einer Aufzugsplattform (5) die Waren entnimmt, welche in auf einer von der Verkaufsfläche (A) unterschiedlichen Lagerfläche (B) angeordneten Vorratsregalen (3) gelagert sind;

– die Aufzugsplattform vertikal mit einer Förderöffnung in Ausrichtung bringt, mittels welcher die Verkaufsfläche (A) und die Lagerfläche (B) kommunizieren und welche sich auf die Zuführseite der Verkaufsregale öffnet, welche dem Publikumsverkehr unzugänglich ist;

– die beladene Aufzugsplattform (5) vertikal durch die Förderöffnung (21) hindurch in Richtung auf die Verkaufsfläche (A) verfährt, bis sie sich in der Höhe der Zuführseite (11b, 12b, 16b) der Verkaufsregale (11, 12, 16) befindet;

– die zugeführten Waren nach dem «first in, first out»-Verfahren auf den Verkaufsregalen (11, 12, 16) anordnet;

– die Aufzugsplattform (5) auf die Lagerfläche zurückführt, um sie in vertikale Ausrichtung mit einer anderen Förderöffnung (21) bringen zu können.

## Claims

1. A device for stocking shelves in self-service goods distribution centres such as small supermarkets, large supermarkets and hypermarkets, comprising superimposed shelves which are accessible at opposite sides, including

– at least one sales level A which is accessible to the customer, and which carries parallel shelves (11, 12, 16) which define between them pedestrian alleys, each of which has a side for stocking the shelves with articles using moving elevator means, and a sales side (11a, 12a, 16a), which is the side opposite said stocking side (11b, 12b, 16b), and

– at least one stocking level B, which is separate from said sales level A, and either above or below the latter, said shelves (11, 12, 16) being disposed as gondolas (10) having an open space (1) which is not accessible to customers and towards which the stocking sides (11b, 12b, 16b) of said shelves (11, 12, 16) are turned, said moving elevator means (4) travelling through transfer openings (21) from the stocking level B to the inside space (1) of said gondolas (10).

2. A device as claimed in claim 1, characterised in that said sales level A is located above said stocking level B, and that said moving elevator means (4) is horizontally displaceable on said lower stocking level B.

3. A device as claimed in either claim 1 or claim 2, characterised in that the moving elevator means (4) comprises at least one automobile elevator trolley (4) whose elevating platform (5) moves between at least two positions:

– a low position in which the overall height of the trolley (4) is below the level of the top of the stocking level B.

– a high position in which the platform (5) is moved so as to be substantially level with the shelves (11, 12) of the sales level A, the trolley (4) travelling from one gondola (10) to the next when said platform (5) is in the low position.

4. A device as claimed in claim 1, characterised in that it is provided with tactile and/or optical detection systems for detecting obstacles in the path of the elevator platform (5) of said moving elevator means (4).

5. A device as claimed in claim 1, characterised in that rails (22) for guiding and centering the moving elevator means (4) are disposed on the floor of stocking level B perpendicular to the transfer openings (21).

6. A device as claimed in either of claims 1 and 2, characterised in that storage shelves (3) are installed on stocking level B substantially perpendicularly to the shelves (11, 12, 16) of sales level A.

7. A device as claimed in either of claims 1 and 2, characterised in that a sliding fire-proof panel (20) is disposed on the level of each transfer opening (21).

8. A method of stocking shelves in self-service goods distribution centres using a device as claimed in any of claims 1 to 7, in which

– items stocked on the storage shelves (3), which are situated in stocking level B, which is different from sales level A, are removed using an elevator platform (5);

– the elevator platform is guided in vertical alignment with a transfer opening, through which sales level A communicates with stocking level B, and emerges opposite the stocking side of the sales shelves which is inaccessible to the public;

– the loaded elevator platform (5) is displaced vertically through said transfer opening (21) in the direction of sales level A, until it is level with the stocking side (11b, 12b, 16b) of the sales shelves (11, 12, 16);

– the transported items are arranged on the shelves (11, 12, 16) in accordance with the «first in, first out» method;

– the elevator platform (5) is moved back to the stocking level in order to be able to move it in vertical alignment with another transfer opening (21).

1/2

FIG.1

# FIG.2